(19) **Europäisches Patentamt**

**European Patent Office**

**Office européen des brevets**

(11) **EP 0 784 375 B1**

(12) **EUROPÄISCHE PATENTSCHRIFT**

(45) Veröffentlichungstag und Bekanntmachung des Hinweises auf die Patenterteilung:
**23.07.2003   Patentblatt 2003/30**

(51) Int Cl.$^7$: **H02M 5/45**

(21) Anmeldenummer: **96402628.0**

(22) Anmeldetag: **04.12.1996**

(54) **Verfahren und Schaltungsanordnung zum Betrieb eines 2-Quadranten-Einspeisestromrichters**

Method and circuit arrangement for operating a two-quadrant power supply converter arrangement

Méthode et circuit pour actionner un convertisseur deux quadrants d'alimentation de puissance

(84) Benannte Vertragsstaaten:
**BE CH DE FR GB LI NL**

(30) Priorität: **09.12.1995   DE 19546000**

(43) Veröffentlichungstag der Anmeldung:
**16.07.1997   Patentblatt 1997/29**

(73) Patentinhaber: **ALSTOM Power Conversion GmbH**
**12277 Berlin (DE)**

(72) Erfinder: **Möhlenkamp, Georg Dr.**
**14979 Grossbeeren (DE)**

(74) Vertreter: **Dreiss, Fuhlendorf, Steimle & Becker Patentanwälte**
**Postfach 10 37 62**
**70032 Stuttgart (DE)**

(56) Entgegenhaltungen:
**DE-A- 3 009 994          DE-C- 4 131 823**

- **PATENT ABSTRACTS OF JAPAN vol. 9, no. 225 (E-342), 11. September 1985 & JP 60 082096 A (TOSHIBA)**
- **PATENT ABSTRACTS OF JAPAN vol. 8, no. 70 (E-235), 3. April 1984 & JP 58 218895 A (TOKYO SHIBAURA DENKI)**

EP 0 784 375 B1

**Beschreibung**

Die Erfindung betrifft ein Verfahren und eine Schaltungsanordnung zum Betrieb eines 2-Quadranten-Einspeisestromrichters, der aus einer Gleichrichterbrücke und einer Wechselrichterbrücke besteht und dem eine Anzahl parallel geschalteter Pulswechselrichter nachgeschaltet ist. Jeder Pulswechselrichter dient zur Speisung eines Motors.

Es ist allgemein bekannt, auf der Gleichstromseite des 2-Quadranten-Einspeisestromrichters einen Gleichspannungszwischenkreis mit einem Zwischenkreiskondensator und einer Zwischenkreisdrossel, die zur Glättung des Stromes dient, anzuordnen und für den Gleichspannungszwischenkreis eine Spannungsregelung mit unterlagerter Stromregelung durchzuführen. Die Induktivität der Zwischenkreisdrossel bildet mit der Zwischenkreiskapazität einen Resonanzkreis, dessen Resonanzfrequenz kleiner als 37 Hz sein sollte, damit der Stromregler des 2-Quadranten-Einspeisestromrichters seinen Regelkreis stabilisieren kann. In Anlagen mit mehreren Antrieben und dezentral angeordneten und einzeln zuschaltbaren Pulswechselrichtern mit jeweils zugeordneten Kondensatoren des Gleichspannungszwischenkreises muß unter Einhaltung der zuvor genannten Resonanzfrequenz die Induktivität der Zwischenkreisdrossel nach der kleinstmöglichen im Gleichspannungszwischenkreis vorkommenden Kapazität bestimmt werden. Das führt zu einer kostenaufwendigen Zwischenkreisdrossel, die in grösseren Anlagen, bei denen im Normalfall eine grössere Anzahl Pulswechselrichter im Betrieb ist, überdimensioniert ist.

Es ist zwar ein Verfahren zum Betrieb eines Zwischenkreisumrichters und eine dazugehörige Schaltungsanordnung ohne Zwischenkreisdrossel bekannt , vgl. EP 078 923 B1, bei denen jedoch ein erheblicher schaltungstechnischer Aufwand für die Umschaltung der Energieübertragungsrichtungen der antiparallel geschalteten Stromrichter erforderlich ist. Bei dem beschriebenen Verfahren reicht die Erfassung der Zwischenkreisspannung als Umschaltkriterium allein nicht aus. Auch die Polaritätsumkehr des Zwischenkreisstromes als einzige Bedingung zur Umschaltung reicht nicht aus. Vielmehr erfolgt eine Umschaltung erst dann, wenn sowohl die Zwischenkreisspannung angestiegen ist als auch der Wirkanteil des Zwischenkreisstromes seine Polarität umgekehrt hat.

Weiterhin ist eine Schaltungsanordnung mit zwei gesteuerten Stromrichtern für einen Energiefluss in entgegengesetzten Richtungen mit einer Zwischenkreisdrossel bekannt, vgl. DE 41 31 823 C1, bei der ein im Zweipunktbetrieb arbeitender Komparator ein Umschalten der Stromrichter veranlasst, um so die Zwischenkreisspannung nach Art eines Zweipunktreglers innerhalb definierter Grenzen zu halten.

Aus der DE 30 09 994 ist eine Anordnung zur Steuerung eines Umrichters bekannt, der über zwei antiparallel geschaltete, netzgeführte Stromrichter, einen Gleichspannungszwischenkreis und einen selbstgeführten Stromrichter Drehstrommotoren mit einem vorgegebenen Spannungs-Frequenzverhältnis speist und bei dem eine Umschaltautomatik zur Umschaltung des einen netzgeführten Stromrichters auf den anderen vorgesehen ist. Beim Übergang der Drehstrommotoren vom Antreiben auf das Bremsen wird durch einen parallel zum Eingang des selbstgeführten Stromrichters und mit einem ohmschen Widerstand in Reihe liegenden Schalter der ohmsche Widerstand eingeschaltet, solange die Spannung im Gleichspannungszwischenkreis einen einstellbaren Wert überschreitet, wodurch optimale Spannungen für die Drehstrommotoren vorgegeben werden.

Schließlich ist aus dem Dokument JP 60 082096 bekannt, mehrere Frequenzumrichter mit feldorientierter Regelung in Abhängigkeit des Betriebszustandes von an die Frequenzumrichter angeschlossenen Motoren zu steuern, um eine von den Motoren im Generatorbetrieb eingespeiste Leistung konstant zu halten.

Mit der Erfindung soll nun die Aufgabe gelöst werden, einen 2-Quadranten-Einspeisestromrichter mit einem Gleichspannungszwischenkreis zu entwickeln, an dem eine Vielzahl von Pulswechselrichtern angeschaltet werden kann, ohne dass eine Zwischenkreisspannungsregelung und eine unterlagerte Stromregelung mit einer Zwischenkreisdrossel erforderlich ist.

Diese Aufgabe wird mit dem im ersten Anspruch angegebenen Verfahren und mit der im vierten Anspruch angegebenen Schaltungsanordnung gelöst.

Das Wesen der Erfindung besteht darin, daß sich im Betrieb eine Zwischenkreisspannung je noch Belastung frei einstellt. Die Größe der Zwischenkreisspannung dient als Indikator für die momentan einzustellende Energieübertragungsrichtung. Die Auswahl der jeweils genutzten Brücke des 2-Quadranten-Einspeisestromrichters wird direkt von der Größe der aktuellen Zwischenkreisspannung abhängig gemacht. Eine Spannungs- und eine Stromregelung ist dabei nicht erforderlich, so daß neben dem gegenüber dem Stand der Technik geringeren Schaltungsaufwand vorteilhafterweise bei der Inbetriebnahme der Anlage der Einstellungsaufwand für die Regelung entfällt.

Bei einer spannungsgeregelten Anordnung ist auch im Leerlauf- oder Schwachlastfall der angeschlossenen Antriebe die Wechselrichterbrücke des 2-Quadranten-Einspeisestromrichters im Einsatz, so daß bei Netzstörungen oder Netzausfällen auch dann Wechselrichterkippungen auftreten können, wenn keine Leistung in das Wechselstromnetz zurückgespeist wird. Bei der erfindungsgemäßen Lösung ist die Wechselrichterbrücke nur im Einsatz, wenn Leistung in das Wechselstromnetz zurückgespeist wird, so daß ein Wechselrichterkippen vermieden wird.

Mit einem Hochsetztrafo, der der Wechselrichterbrücke zugeordnet ist, wird sichergestellt, daß die gleichgerichtete Netzspannung der Wechselrichterbrücke auf einen größeren Wert gebracht wird als die der Gleichrichterbrücke, so daß damit im generatorischen Betrieb eine höhere Zwischenkreisspannung möglich ist als im motorischen Betrieb maximal erreicht werden kann. Wenn die Zwischenkreisspannung die maximale gleichgerichtete Netzspannung der Gleichrichterbrücke übersteigt, liefert die Last Energie, die Energie muß damit zum Netz übertragen werden und die Wechselrichterbrücke muß gezündet werden. Bei einer bevorzugten Ausführungsform wird durch den Hochsetztransformator die Ausgangsspannung etwa um 25% im Vergleich zur Eingangsspannung erhöht.

Um einen stabilen Betrieb zu erreichen, ist es zweckmäßig, die Umschaltung der Energieübertragungsrichtungen des 2-Quadranten-Einspeisestromrichters mit einer Hysterese der Spannungsschwelle für die Umschaltung vorzunehmen. Dabei ist es günstig, die Spannungsschwelle mindestens so hoch einzustellen wie es der im Leerlauf des 2-Quadranten-Einspeisestromrichters theoretisch erreichbare Wert der Spitzenspannung der Zwischenkreiskondenstaoren vorgibt.

Die Erfindung wird nunmehr an einem Ausführungsbeispiel erläutert. In der dazugehörigen Zeichnung zeigen:

Fig. 1a    ein Blockschaltbild eines 2-Quadranten-Einspeisestromrichters mit Pulswechselrichtern und Motoren,

Fig. 1b    ein schaltungstechnisches Detail der Fig. 1a mit Gleichspannungssammelschiene, Gleichspannungszwischenkreisen und Pulswechselrichtern und

Fig. 2    ein Zeitdiagramm der Zwischenkreisspannung mit den Umschaltzeitpunkten vom Gleichrichterbetrieb in den Wechselrichterbetrieb.

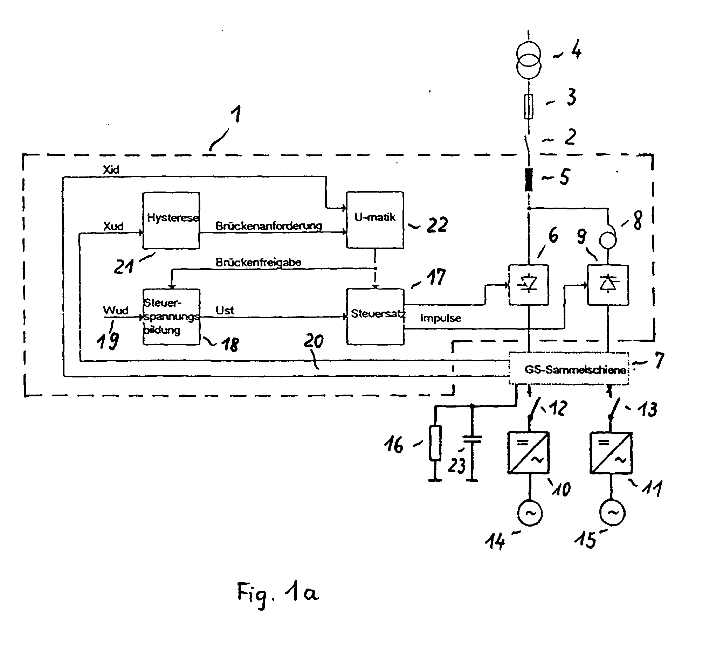

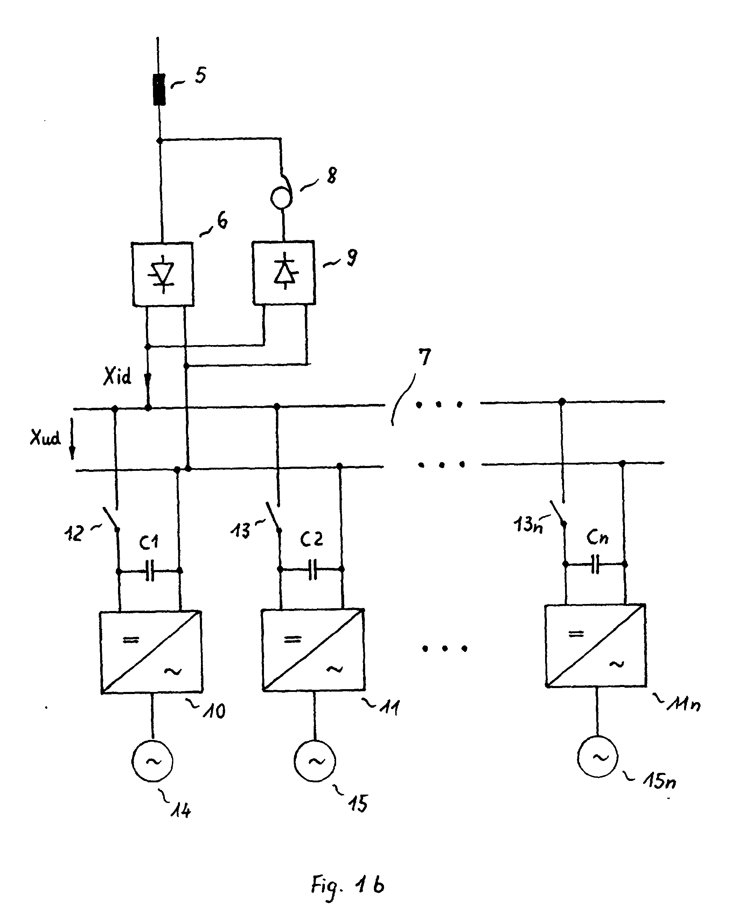

Gemäß Fig. 1a besteht ein 2-Quadranten-Einspeisestromrichter aus einer Gleichrichterbrücke 6, einer Wechselrichterbrücke 9 mit zugeordnetem Hochsetztransformator 8, einer Kommutierungsdrossel 5 sowie einer Steuerspannungserzeugungsschaltung 18, einem Steuersatz 17, einer Hystereseschaltung 21 und einer Umschaltautomatik 22. An das Starkstromnetz ist der 2-Quadranten-Einspeisestromrichter über einen Transformator 4, eine Sicherung 3 und einem Schalter 2 angeschlossen. Gemäß Fig. 1b ist der 2-Quadranten-Einspeisestromrichter an eine Gleichspannungssammelschiene 7 geschaltet, an die über Schalter 12, 13, 13n und Gleichspannungszwischenkreise, dargestellt durch Zwischenkreiskondensatoren C1, C2, Cn, Pulswechselrichter 10, 11, 11n mit diesen zugeordneten Motoren 14, 15, 15n angeschlossen sind.

Die Gleichrichterbrücke 6 ist netzgeführt gesteuert und wird mit einem konstanten Zünd- bzw.

Steuerwinkel $\alpha$ betrieben. Die Gleichrichterbrücke 6 verhält sich in der erfindungsgemäßen Schaltungsanordnung wie ein Diodengleichrichter, bei dem keinerlei Regelung im Eingriff ist. Insbesondere die Form der Netz- und Gleichströme gehorcht den Bildungsgesetzen eines Diodengleichrichters.

Auch die Wechselrichterbrücke 9 wird mit einem konstanten Steuerwinkel $\alpha$, und zwar immer in Wechselrichterlage betrieben. Wie im Gleichrichterbetrieb stellt sich die Zwischenkreisspannung Xud entsprechend der aktuellen Netzspannung, dem konstanten Steuerwinkel $\alpha$ und der aktuellen Belastung ein. Im rückspeisenden Betrieb ist aber die Zwischenkreisspannung Xud größer als die gleichgerichtete Netzspannung, so daß dann der Gleichstrom Xid von den jeweiligen Zwischenkreiskondensatoren C1, C2, Cn in die Wechselrichterbrücke 9 fließt. Deshalb stellt sich der Strom Xid entsprechend den Induktivitäten im Kreis und dem aktuellen Spannungsgefälle zwischen der sich an den Kondensatoren C1, C2, Cn durch die rückspeisenden Motoren 14, 15, 15n ergebenden Zwischenkreisspannung und der vom 2-Quadranten-Einspeisestromrichter 1 zur Verfügung gestellten Spannung ein.

Die Wechselrichterbrücke 9 wird über den Hochsetztransformator 8 gespeist, so daß deren Ausgangsgleichspannung bei Wechselrichtergrenzlage stets größer als die maximal von der Gleichrichterbrücke 6 erzeugte Gleichspannung ist.

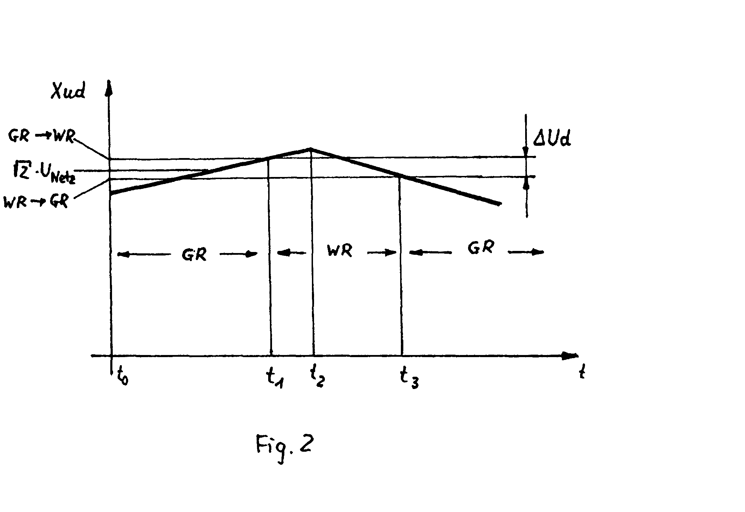

Die Wahl der jeweils genutzten Gleichrichterbrücke 6 oder der Wechselbrücke 9 ist direkt von der aktuellen Zwischenkreisspannung Xud an der Gleichspannungssammelschiene 7 abhängig. Im Motorbetrieb, also bei niedriger Zwischenkreisspannung Xud arbeitet die Gleichrichterbrücke 6; im Generatorbetrieb bei höherer Zwischenkreisspannung Xud arbeitet die Wechselrichterbrücke 9. Die Bereiche, in denen die Gleichrichterbrücke 6 und die Wechselrichterbrücke 9 angesteuert werden, sind mit einer Hysterese überlappend ausgelegt, siehe dazu auch Fig. 2. Dabei wird die Umschaltspannungsschwelle vom Gleichrichterbetrieb in den Wechselrichterbetrieb zweckmäßigerweise so hoch angesetzt, daß sie über dem im Leerlauf der Anlage theoretisch erreichbaren Wert für die Spitzenaufladung der Zwischenkreiskondensatoren $\sqrt{2} * U_{Netz}$ liegt, so daß Umschaltungen im Leerlaufbetrieb vermieden werden und ein stabiler Betrieb gewährleistet ist.

Wenn die Gleichspannung Xud an der Gleichspannungssammelschiene 7 die Umschaltspannungsschwelle erreicht hat, spricht die Hystereseschaltung 21 an und erzeugt ein Signal, das von der Umschaltautomatik 22 die Brückenfreigabe für die Wechselrichterbrücke 9 abfordert. Die Umschaltung wird jedoch nur dann ausgelöst, wenn die Umschaltautomatik 22 einen Nulldurchgang des Zwischenkreisstromes Xid erkannt hat. Dann wird die Steuerspannungserzeugungsschaltung 18 zur Abgabe einer Steuerspannung Ust und der Steuersatz 17 zur Erzeugung von Steuerimpulsen für die ausgewählte Gleichrichterbrücke 9 veranlaßt. Der Steuersatz 17 stellt die Steuerimpulse an die von der Steuerspannungserzeugungsschaltung 18 gewünschte Stelle. Der Steuerwinkel α für die Gleichrichterbrücke 6 kann über das Signal Wud des Kanals 19 vorgegeben werden, beispielsweise α=15°. Die Steuerspannung Ust wird bei gewählter Wechselrichterbrücke 9 von der Steuerspannungerzeugungsschaltung 18 unveränderbar so vorgegeben, daß die Impulse in Wechselrichterendlage stehen.

Erfolgt durch Änderung des Wertes der Zwischenkreisspannung Xud ein Wechsel in der Anforderung von Wechselrichterbrücke 9 zur Gleichrichterbrücke 6 und umgekehrt, so wird dies von der Umschaltautomatik 22 sowohl der Steuerspannungserzeugungsschaltung 18 als auch dem Steuersatz 17 mitgeteilt. Das von der Umschaltautomatik 22 gelieferte Signal Brückenfreigabe kann den Informationsgehalt "Gleichrichterbrücke 6 gefordert" oder "Wechselrichterbrücke 9 gefordert" haben, wenn gleichzeitig ein Nulldurchgang des Zwischenkreisstromes Xid erkannt wurde. Das Signal Brückenfreigabe hat den Informationsgehalt "Brücken sperren" solange der Zwischenkreisstrom Xid ungleich Null ist.

Eine Stromregelung ist nicht erforderlich; die physikalischen Mechanismen stellen selbsttätig den zur Energieübertragungsrichtung zugehörigen Strom ein. Der Wert des Zwischenkreisstromes Xid dient lediglich bedarfsweise zur Fehlerstromabschaltung und zur Stromnullerkennung bei der Brückenumschaltung.

Fig. 2 zeigt die Zwischenkreisspannung Xud als Funktion der Zeit t und die Bereiche Gleichrichterbetrieb GR und Wechselrichterbetrieb WR. Es wird angenommen, daß die Zwischenkreisspannung Xud stetig ansteigt. Dieser Fall tritt auf, wenn die Summenleistung der angeschlossenen Pulswechselrichter 10, 11, 11n generatorisch ist, also augenblicklich von allen Antrieben insgesamt mehr Leistung abgegeben als aufgenommen wird. Zum Zeitpunkt $t_1$ hat die Zwischenkreisspannung Xud einen ersten Umschaltschwellenwert, der größer als Xud = $\sqrt{2}$ * $U_{Netz}$ ist, erreicht. Während vom Zeitpunkt $t_0$ bis zum Zeitpunkt $t_1$ der 2- Quadranten-Einspeisestromrichter 1 im Gleichrichterbetrieb GR gearbeitet hat, geht er nun zum Zeitpunkt $t_1$ in den Wechselrichterbetrieb WR über. Bei den Lastverhältnissen, die dem Diagramm gemäß Fig. 2 zugrunde liegen, steigt die Zwischenkreisspannung Xud bis zum Zeitpunkt $t_2$ an weil die generatorische Leistung der Motoren 14, 15, 15n stetig steigt und fällt dann mit fallender generatorischer Leistung der Motoren 14, 15, 15n wieder ab. Zum Zeitpunkt $t_3$ unterschreitet die Zwischenkreisspannung Xud einen zweiten Umschaltschwellenwert, der um einen Hysteresewert ΔUd unter dem ersten Umschaltschwellenwert liegt. Von diesem Zeitpunkt $t_3$ angeht der 2-Quadranten-Einspeisestromrichter 1 vom Wechselrichterbetrieb WR in den Gleichrichterbetrieb GR über.

Der 2-Quadranten-Einspeisestromrichter 1 geht also nur dann in den Wechselbetrieb WR über, wenn aufgrund der Leistungsrückspeisung aus den Motoren 14, 15, 15n die Zwischenkreisspannung Xud über den im Gleichrichterbetrieb GR überhaupt möglichen Wert angestiegen ist. Ein Wechselrichterkippen im Leerlauf aufgrund schlechter Netzbedingungen wird damit vorteilhafterweise vermieden.

Da sich beim dynamischen Betrieb der Pulsrichter 10, 11, 11n die Zwischenkreisspannung Xud sehr schnell ändern kann, arbeitet die Umschaltautomatik 22 ohne wesentlichen Zeitverzug, um große Stromhübe bei der ersten Wechselrichterzündung zu vermeiden.

Üblicherweise sind den Pulswechselrichtern 10, 11, 1 1n Überwachungsschaltungen für Unterspannung zugeordnet. Für den Fall, daß kein Pulswechselrichter 10, 11, 11n an der Gleichspannungssammelschiene 7 eingeschaltet ist, kann es bei momentan ungünstigen Netzverhältnissen zu Unterspannungsstörungen kommen. Deshalb ist es günstig, einen Grundlastwiderstand 16 und einen Kondensator 23 fest mit der Gleichspannungssammelschiene 7 zu verbinden. Der Grundlastwiderstand 16 wird für den doppelten Haltestrom der Thyristoren der Gleichrichterbrücke 6 und der Wechselrichterbrücke 9 berechnet, die Kapazität des Kondensators 23 wird so ausgelegt, daß sie die geringen Oberschwingungen im Leerlauf beherrscht.

Die Gleichrichterbrücke 6 des 2-Quadranten-Einspeisestromrichters wird mit konstantem Zünd- bzw. Steuerwinkel α betrieben. Daher stellt sich die Zwischenkreisspannung Xud in den durch die Netzspannung und durch den Steuerwinkel α gegebenen Grenzen je nach Belastung frei ein. Dies entspricht dem Betrieb einer Gleichspannungssammelschiene 7 an einer Drehstromdiodenbrücke.

Erfindungsgemäß wird eine universell einsetzbare Schaltungsanordnung für einen 2-Quadranten-Einspeisestromrichter 1 angegeben, der für eine unterschiedliche Anzahl von Antrieben geeignet ist und auch bei wechselnden Lastverhältnissen eine stabile Arbeitsweise gewährleistet. Eine Zwischenkreisdrossel sowie der Aufwand für Reglerhardware für die Spannungs- und Stromregelung wie er aus Anordnungen nach dem Stand der Technik bekannt ist, werden nicht benötigt, so daß sich im Vergleich zu bekannten Verfahren und Schaltungsanordnungen eine deutlich positive Kostenbilanz ergibt.

**Patentansprüche**

1. Verfahren zum Betrieb eines 2-Quadranten-Einspeisestromrichters bestehend aus einer Gleichrichterbrücke (6) und einer Wechselrichterbrücke (9), für mindestens einen Pulswechselrichter (10, 11, 11n), der über eine Gleichspannungssammelschiene (7) mit dem 2-Quadranten-Einspeisestromrichter verbunden ist, wobei ausschließlich in Abhängigkeit von dem Wert der Gleichspannung (Xud) an der Gleichspannungssammelschiene (7) die Energieübertragungsrichtung des 2-Quadranten-Einspeisestromrichters gesteuert wird, wobei in Abhängigkeit von dem Wert der Gleichspannung (Xud) an der Gleichspannungssammelschiene (7) unterhalb einer Spannungsschwelle die Stromrichterventile der Gleichrichterbrücke (6) und oberhalb einer Spannungsschwelle die Stromrichterventile der Wechselrichterbrücke (9) über einen Steuersatz (17) mit Steuersignalen angesteuert werden, **dadurch gekennzeichnet, dass** die Stromrichterventile jeweils mit konstanten Steuerwinkeln geschaltet werden.

2. Verfahren nach Anspruch 1, **dadurch gekennzeichnet, dass** die Umschaltung des 2-Quadranten-Einspeisestromrichters von einer Energieübertragungsrichtung in die andere Energieübertragungsrichtung mit einer Hysterese erfolgt.

3. Verfahren nach den Ansprüchen 1 bis 2, **dadurch gekennzeichnet, dass** die Umschaltung des 2-Quadranten-Einspeisestromrichters von einer Energieübertragungsrichtung in die andere Energieübertragungsrichtung zum Zeitpunkt des Nulldurchganges des Stromes (Xid) im Gleichspannungszwischenkreis erfolgt.

4. Schaltungsanordnung mit einem 2-Quadranten-Einspeisestromrichter, der über eine Drossel (5) an einem Wechselspannungsnetz angeschlossen ist, dessen Wechselrichterbrücke (9) über einen Hochsetztransformator (8) mit dem dem Wechselspannungsnetz abgewandten Anschluss der Drossel (5) verbunden ist und dessen von dem Wechselspannungsnetz abgewendeten Anschlüsse an eine Gleichspannungssammelschiene (7) geschaltet sind, **dadurch gekennzeichnet, dass** an die Gleichspannungssammelschiene (7) mehrere Pulswechselrichter (10, 11, 11n) derart über jeweils einen Gleichspannungszwischenkreis geschaltet sind, dass jedem Pulswechselrichter (10, 11, 11n) ein Zwischenkreiskondensator (C1, C2, Cn) zugeordnet ist, und dass die Stromrichterventile der Wechselrichterbrücke (9) mit konstanten Steuerwinkeln geschaltet werden.

## Claims

1. Method for operating a 2-quadrant feed current converter consisting of a rectifier bridge (6) and an inverter bridge (9), for at least one pulse inverter (10, 11, 11n) which is connected to the 2-quadrant feed current converter via a DC voltage bus (7), the energy transfer direction of the 2-quadrant feed current converter being controlled exclusively as a function of the value of the DC voltage (Xud) at the DC voltage bus (7) and, depending on the value of the DC voltage (Xud) at the DC voltage bus (7), the converter valves of the rectifier bridge (6) being controlled below a voltage threshold, and the converter valves of the inverter bridge (9) being controlled above a voltage threshold, via a control unit (17) by means of control signals, **characterized in that** the converter valves are each switched with constant inverter angles.

2. Method according to Claim 1, **characterized in that** the switching of the 2-quadrant feed current converter from one energy transfer direction to the other energy transfer direction is effected with a hysteresis.

3. Method according to Claims 1 and 2, **characterized in that** the switching of the 2-quadrant feed current converter from one energy transfer direction to the other energy transfer direction is effected when the current (Xid) passes through zero in the DC voltage link.

4. Circuit arrangement comprising a 2-quadrant feed current converter which is connected via a choke (5) to an AC voltage network, whose inverter bridge (9) is connected via a step-up transformer (8) to that connection of the choke (5) which is on the opposite side to the AC voltage network and whose connections which are on the opposite side to the AC voltage network are switched to a DC voltage bus (7), **characterized in that** a plurality of pulse inverters (10, 11, 11n) are each switched to the DC voltage bus (7) via, in each case, a DC voltage link, in such a way that a link capacitor (C1, C2, Cn) is coordinated with each pulse inverter (10, 11, 11n), and that the converter valves of the inverter bridge (9) are switched with constant inverter angles.

## Revendications

1. Méthode pour faire fonctionner un convertisseur d'alimentation de puissance deux quadrants composé d'un redresseur monté en pont (6) et d'un onduleur monté en pont (9) pour au moins un onduleur pulsé (10, 11, 11n) qui est relié au convertisseur d'alimentation de puissance deux quadrants par l'intermédiaire d'une barre omnibus à tension continue (7), le sens de transfert d'énergie du convertisseur d'alimentation de puissance deux quadrants étant commandé uniquement en fonction de la valeur de la tension continue (Xud) aux bornes de la barre omnibus à tension continue (7), les valves de convertisseur du redresseur monté en pont (6) étant excitées en dessous d'un seuil de tension et les valves de convertisseur de l'onduleur monté en pont (9) étant excitées au-dessus d'un seuil de tension, en fonction de la valeur de la tension continue (Xud) aux bornes de la barre omnibus à tension continue (7), par l'intermédiaire d'un élément de déclenchement (17) avec des signaux de commande, **caractérisée en ce que** les valves de convertisseur sont commutées respectivement avec des angles de retard à la commande constants.

2. Méthode selon la revendication 1, **caractérisée en ce que** le basculement du convertisseur d'alimentation de puissance deux quadrants d'un sens de transfert d'énergie à l'autre sens de transfert d'énergie s'effectue avec une hystérésis.

3. Méthode selon les revendications 1 à 2, **caractérisée en ce que** le basculement du convertisseur d'alimentation de puissance deux quadrants d'un sens de transfert d'énergie à l'autre sens de transfert d'énergie s'effectue au moment où le courant (Xid) dans le circuit intermédiaire à tension continue passe par zéro.

4. Circuit avec un convertisseur d'alimentation de puissance deux quadrants relié par l'intermédiaire d'une bobine de choc (5) à un réseau à tension alternative, dont l'onduleur monté en pont (9) est relié par le biais d'un transformateur élévateur (8) à la connexion de la bobine (5) qui est opposée au réseau à tension alternative et dont les connexions dirigées à l'opposé du réseau à tension alternative sont reliées à une barre omnibus à tension continue (7), **caractérisé en ce que** plusieurs onduleurs pulsés (10, 11, 11n) sont respectivement reliés à la barre omnibus à tension continue (7) par le biais d'un circuit intermédiaire à tension continue de telle façon que chaque onduleur pulsé (10, 11, 11n) a un condensateur de circuit intermédiaire (C1, C2, Cn) qui lui est affecté et **en ce que** les valves de convertisseur de l'onduleur monté en pont (9) sont commutées avec des angles de retard à la commande constants.

Fig. 1a

Fig. 1 b

Fig. 2